# EUROPÄISCHE PATENTSCHRIFT

(11) **EP 1 063 900 B1**
(45) Veröffentlichungstag und Bekanntmachung des Hinweises auf die Patenterteilung: **26.06.2002**
(21) Anmeldenummer: 99915497.4
(22) Anmeldetag: 24.02.1999
(51) Int. Cl.: A23L 1/221, A23L 1/172, A23L 1/36, A23D 9/007

(54) **GEWÜRZMISCHUNG UND DEREN VERWENDUNG**
MIXTURE OF HERBS AND USE THEREOF
MELANGE DE CONDIMENTS ET SON UTILISATION

(30) Priorität: 24.03.1998 DE 19813972
(43) Veröffentlichungstag der Anmeldung: 03.01.2001
(73) Patentinhaber: Johne, Martin, 49393 Lohne (DE)
(72) Erfinder: JOHNE, Martin, D-49393 Lohne (DE); JOHNE, Frank, D-01561 Grossenhain-Zschauitz (DE)
(74) Vertreter: Effert, Bressel und Kollegen
(86) Internationale Anmeldenummer: DE9900583
(87) Internationale Veröffentlichungsnummer: WO9948385

(56) Entgegenhaltungen:
- ES-A- 2 009 679
- US-A- 4 767 636
- DATABASE WPI Section Ch, Week 9732 Derwent Publications Ltd., London, GB; Class D13, AN 97-342249 XP002107697 & CN 1 107 005 A (LU H), 23. August 1995

## Beschreibung

Die Erfindung betrifft eine Gewürzmischung und deren Verwendung.

Zum Würzen von Speisen ist es bekannt, neben Salz und Pfeffer auch andere den Geschmack der Speisen beeinflussende Stoffe zu verwenden, beispielsweise Oregano, Majoran, Thymian, Knoblauch sowie heimische Gewürze, wie beispielsweise Lauch, Sellerie, Möhre, Zwiebeln und Petersilie. Darüber hinaus werden zum Erzeugen eines besonders vollen und fülligen Geschmacks Geschmacksverstärker, beispielsweise Natriumglutamat, Inosin-5'-monophosphat und Guanosin-5'-monophosphat verwendet.

Eine derartige Gewürzmischung, insbesondere für Bratgut aus tierischen Nahrungsmitteln, ist in DE 39 36 651 A1 beschrieben. Die dort beschriebene Saucenmischung enthält als wesentliche Bestandteile Wasser, Öl, Zwiebeln, Essig, Salz, Petersilie, schwarzen Pfeffer, Oregano, Knoblauch, Cayenne-Pfeffer und scharfen Paprika. Diese Saucenmischung soll dem Bratgut einen neuen Geschmack verleihen und überdies den Vorteil aufweisen, daß sie ohne Konservierungsstoffe und ohne Aromaverlust lange haltbar ist.

Ein anderes Gewürz ist in DE-OS 26 23 334 beschrieben. Dieses Flüssiggewürz dient ebenfalls zur Würzung von aus tierischen Nahrungsmitteln bestehendem Bratgut. Es enthält als wesentliche Bestandteile Weinessig, Öl, mittelscharfen Senf, Paprika der Qualität edelsüß rot, weißen reinen gemahlenen Pfeffer, gemahlenen Majoran, Currypulver Indian, Salz, Glutamat, gemahlene Macisblüte und Zucker. Mit diesem Gewürz sollen insbesondere Fertiggerichte vor der Verpackung derart behandelt werden, daß vor dem Braten oder Grillen eine Nachwürzung nicht erforderlich ist. Aus dieser Druckschrift ist ferner bekannt, daß Gewürze teilweise konservierende Stoffe mit bakteriostatischer Wirkung enthalten.

Zur Geschmacksabrundung von Speisen ist es auch üblich, Gemüse hinzuzufügen. Beispielsweise ist es bekannt, Fleisch- und Fischsuppen mittels einer Mischung aus Möhre, Petersilie und Sellerieknollen ("Suppengrün")zu verfeinern und den pikanten Geschmack des Fleisches oder Fisches zu verstärken. In DE-OS 24 24 274 wird eine derartige Mischung näher beschrieben.

In JP-A-58 020 172 wird eine Würzmischung zum Überstreuen von gekochtem Reis beschrieben, in der hauptsächlich Eipulver enthalten ist. Daneben enthält diese Mischung übliche Gewürze, Stärke, Protein und Wasser.

Speziell Eier und Eiprodukte als Nahrungsmittel weisen jedoch Nachteile auf, da bekannt ist, daß diese die Gefahr der Arteriosklerose und Thrombose sowie das Herzinfarktrisiko wegen des relativ hohen Cholesteringehaltes erhöhen. Das fettähnliche Cholesterin neigt zur Einlagerung in Arterienwände und damit zur Förderung des Verkalkungsprozesses. Ferner wirkt Cholesterin auch bei der Bildung von Gallensteinen mit. Damit ist der Genuß von Eiern und Eiprodukten eingeschränkt. Insbesondere solche Personengruppen, die zur Arteriosklerose, zu Thrombosen sowie zum Herzinfarkt oder zur Bildung von Gallensteinen neigen, dürfen nur geringe Mengen von Eiern und Eiprodukten zu sich nehmen oder müssen auf deren Verzehr ganz verzichten.

Der vorliegenden Erfindung liegt von daher das Problem zugrunde, die Nachteile der bekannten Gewürzmischungen zu vermeiden und insbesondere eine Mischung zu finden, die speziell zum Würzen von Eiern und Eiprodukten geeignet ist, indem die beschriebenen nachteiligen Wirkungen der Eier aufgehoben werden und beim Verzehr der mit der Gewürzmischung versehenen Eier und Eiprodukte der Abbau von Cholesterin im menschlichen Körper und insbesondere im Blut gefördert wird. Ferner soll die Gewürzmischung zur Geschmacksverbesserung beim Verzehr der Eier und Eiprodukte beitragen. Sie soll aus Rohstoffen bestehen. die nicht gekocht, pasteurisiert oder durch chemische oder strahlenchemische Verfahren haltbar gemacht worden sind. Trotzdem soll die Haltbarkeit der Gewürzmischung im angebrochenen Zustand im Kühlschrank mindestens 2 Monate und im nicht angebrochenen Zustand 12 Monate betragen, ohne daß ein Aromaverlust bemerkbar ist. Außerdem soll die Mischung auch optisch und olfaktorisch einen angenehmen, frischen Eindruck machen.

Gelöst wird dieses Problem durch eine Gewürzmischung gemäß Anspruch 1 und durch die Verwendung der Mischung gemäß Anspruch 13. Bevorzugte Ausführungsformen der Erfindung sind in den Unteransprüchen angegeben.

Die Gewürzmischung enthält vorzugsweise
a) Pflanzenteile mindestens einer Pflanzenart aus der Gruppe, bestehend aus Bärenlauch, Gartenkresse, Brunnenkresse, Brennessel, Löwenzahn, Petersilie, Broccoli, Grünkohl, Kohlrabi, Rosenkohl, Weißkohl, Wirsingkohl, Schafgarbe, Arnika und Wacholder,
b) Pflanzenteile aus der Gruppe, bestehend aus Getreidekeimen, Getreideflocken und Nüssen,
c) Meersalz und
d) ungesättigte Fettsäuren enthaltendes Öl.

Die erfindungsgemäße Mischung ist besonders gut zum Würzen von Eiern und Eiprodukten geeignet Selbstverständlich kann diese Mischung auch für andere, insbesondere cholesterinhaltige Lebensmittel verwendet werden, beispielsweise zum Würzen von Salaten, Saucen, Suppen und Fleischspeisen. Sie enthält vorzugsweise frische Kräuter und Gemüse.

Zusätzlich können in der Gewürzmischung auch Pektine enthalten sein, vorzugsweise Apfelpektin, insbesondere in einer Konzentration von mindestens 0,1 Gew.-% und höchstens 20 Gew.-%. Das zusätzlich enthaltene Pektin kann zumindest teilweise durch zusätzliche Zugabe von Apfel in der Gewürzmischung enthalten sein, da Pektine auch in Äpfeln enthalten sind. Jedoch kann es zur separaten Dosierung der Pektine und der Äpfel erforderlich sein. die Pektine zur Gewürzmischung zusätzlich zuzugeben.

Darüber hinaus kann die Gewürzmischung zusätzlich auch gemahlenen oder ungemahlenen Pfeffer sowie weitere Gewürze enthalten, wobei der Pfeffer vorzugsweise in einer Konzentration von mindestens 0,1 Gew.-% und höchstens 20 Gew.-% enthalten ist. Dadurch wird der Geschmack der Eier und Eiprodukte weiter steuerbar. Es kann schwarzer und weißer Pfeffer eingesetzt werden.

Außerdem kann die Mischung auch Zwiebeln und/oder Knoblauch, vorzugsweise in einer Konzentration von mindestens 0,1 Gew.-% und höchstens 40 Gew.-%, enthalten. Beispielsweise können die Zwiebeln fein gewürfelt sein oder in Form von Zwiebelringen vorliegen. Die Zwiebeln können in roher oder getrockneter Form zur Gewürzmischung zugegeben werden. Knoblauch kann zugegeben werden, um andere Geschmacksrichtungen einzustellen oder der Gewürzmischung weitere physiologische Wirksamkeit zu verleihen

Zur Geschmacksverbesserung kann die Gewürzmischung auch Pflanzenteile des Sellerie, insbesondere Knollenteile und/oder Blätter, enthalten.

Schließlich kann in der Gewürzmischung zusätzlich auch Möhre enthalten sein, vorzugsweise in einer Konzentration von 0,2 bis 20 Gew.-%.

Um einen besonders fülligen und volumenreichen Geschmack zu erreichen, können der Gewürzmischung ferner Geschmacksverstärker zugegeben werden, beispielsweise Natriumglutamat, Inosin-5'-monophosphat oder Guanosin-5'-monophosphat.

Selbstverständlich können der Mischung auch weitere Bestandteile hinzugefügt werden.

Durch die spezielle Zusammensetzung der Mischung werden vorteilhafte Wirkungen erzielt. Die einzelnen Bestandteile der Gewürzmischung üben jeweils unterschiedliche Wirkungen aus. Deren Zusammenwirken ist durch die Mischung gewährleistet:
1. Die Mischung verhindert, daß sich der relativ hohe Cholesteringehalt der Eier oder Eiprodukte physiologisch nachteilig bemerkbar macht. Durch den Gehalt von Phytosterinen in Olivenöl und Getreidekeimen bzw. -flocken, insbesondere Haferflocken, ("Nutze die heilkräftigen Pflanzen" von Dr. med. Ernst Schneider, Saatkorn-Verlag, Hamburg, Seiten 43 und 287), durch Magnesium in Meersalz, Broccoli, Grünkohl, Kohlrabi, Rosenkohl, Weißkohl, Äpfeln, Nüssen und Sonnenblumenkernen ("Nutze die heilkräftigen Pflanzen", ibid, Seiten 171 und 187 und Römpps Chemie-Lexikon, Seite 2669), ferner durch Vitamin E in Olivenöl, Äpfeln, Nüssen und Sonnenblumenkernen ("Nutze die heilkräftigen Pflanzen", ibid, Seiten 42 und 83) sowie in einer bevorzugten Ausführungsform auch durch Pektin in Äpfeln wird die Aufnahme von Cholesterin aus der Nahrung verhindert und damit der Cholesterinspiegel im Blut vermindert ("Nutze die heilkräftigen Pflanzen", ibid, Seite 85), so daß die Gefahr der Arterienverkalkung, Thrombosenbildung und das Herzinfarktrisiko vermindert sind. Pektine behindern die Gerinnung des Blutes und wirken daher mit den übrigen Mischungsbestandteilen zur Verminderung des Cholesterinspiegels im Blut sowie der Blutreinigung zusammen. Da darüber hinaus pflanzliches Eiweiß im Gegensatz zu tierischem Eiweiß den Cholesterinspiegel im Blut erniedrigt, wirken in der vorgenannten Weise auch Broccoli, Grünkohl, Kohlrabi, Rosenkohl, Weißkohl und Wirsingkohl aufgrund des in ihnen enthaltenen Eiweißes ("Nutze die heilkräftigen Pflanzen", ibid, Seiten 177 und 187). Meersalz vergrößert das Lösungsvermögen des Blutserums für Cholesterin, so daß dessen Aufnahme durch die Zellen verringert wird ("Nutze die heilkräftigen Pflanzen", ibid, Seite 153 und Römpps Chemie-Lexikon, Seite 2669).
   Insbesondere dadurch, daß die Mischung sowohl Phytosterine als auch Pektine, ungesättigte Fettsäuren, Magnesium und Vitamin E enthält, wirkt die Mischung den vorgenannten Schädigungen entgegen und fördert sogar deren Beseitigung.
2. Die Mischung ist so zusammengesetzt, daß durch ihre Zugabe zu Eiern und Eiprodukten schmackhafte Speisen zubereitet werden können. Insbesondere durch den Salz- und gegebenenfalls Sellerie-, Möhren- sowie Pfeffergehalt wird ein pikanter Geschmack des Eiproduktes erreicht.
3. Die Mischung wind vorzugsweise aus Rohprodukten hergestellt, die nicht gekocht, pasteurisiert oder durch chemische oder strahlenchemische Verfahren haltbar gemacht worden sind. Trotzdem beträgt die Haltbarkeit der Gewürzmischung selbst im Kühlschrank im angebrochenen Zustand mindestens zwei Monate und im nicht angebrochenen Zustand mindestens 12 Monate.
4. Das in Elern und Eiprodukten enthaltene Vitamin A gelangt durch die Verwendung fetthaltiger Bestandteile der Gewürzmischung, beispielsweise von Olivenöl, besser in den Körper und insbesondere in die Blutbahn ("Nutze die heilkräftigen Pflanzen", ibid, Seiten 170 und 187). Dadurch wird die den Eiern und Eiprodukten innewohnende Wirkung des Vitamins A, Augen-, Haut- und Schleimhauterkrankungen zu unterdrücken, optimiert.
5. Ferner fördert die Gewürzmischung die Reinigung des Blutes sowie die Stoffwechselvorgänge im Körper, vorzugsweise im Magen-Darm-Trakt. Eine verbesserte Blutreinigung wird vor allem durch Löwenzahn, Brennessel, Schafgarbe und Gartenkresse erreicht ("Nutze die heilkräftigen Pflanzen", ibid, Seite 234, 243 und 249 sowie "Heilpflanzen heute" von Mannfried Pahlow, Gräfe und Unzer Verlag, München, 1980, Seite 60). Bärenlauch, Gartenkresse, Brennnessel, Löwenzahn, Schafgarbe und Wacholder wirken stoffwechselfördernd ("Nutze die heilkräftigen Pflanzen", ibid., Seite 234 sowie "Heilpflanzen heute", ibid., Seite 60 und "Naturrezepte aus der Hausapotheke" von Roland W. Fink-Henseler, Gondrom-Verlag, Bindlach, 1995, Seite 88). Brennessel hat wegen des Gehaltes an Vitamin A darüber hinaus positive Wirkungen auf die Haut-und Schleimhautbildung. Löwenzahn hat blutdrucksenkende Wirkung ("Nutze die heilkräftigen Pflanzen", ibid, Seite 249).
6. Ferner wird die Gewürzmischung durch den Gehalt der Grünpflanzen aus der Gruppe Bärenlauch, Gartenkresse, Brunnenkresse, Brennessel, Löwenzahn, Petersilie, Broccoli, Grünkohl, Kohlrabi, Rosenkohl, Weißkohl, Wirsingkohl, Schafgarbe, Arnika und Wacholder auch optisch als angenehm empfunden, da diese Pflanzen durch ihren hohen Chlorophyligehalt, insbesondere wenn sie frisch verarbeitet werden, der Mischung eine frische grüne Farbe verleihen. Petersilie hat zudem die weitere Wirkung, einen unangenehmen Geruch bestimmter Bestandteile, beispielsweise von gegebenenfalls enthaltenern Knoblauch, zu unterdrücken.

Vorzugsweise werden folgende Konzentrationen der wichtigsten Bestandteile eingestellt.
a) mindestens 0,2 Gew.-% Pflanzenteile von Pflanzen aus der Gruppe, bestehend aus Bärenlauch, Gartenkresse, Brunnenkresse, Blennessel, Löwenzahn, Petersilie, Broccoli, Grünkohl, Kohlrabi, Rosenkohl, Weißkohl, Wirsingkohl, Schafgarbe, Arnika und Wacholder; die obere Konzentrationsgrenze liegt bei 90 Gew.-%; besonders bevorzugt sind Konzentrationen von mindestens 1 Gew.-% und höchstens 70 Gew.-% und insbesondere eine Konzentration von etwa 56 Gew.-%;
b) mindestens 0,1 Gew.-% Pflanzenteile aus der Gruppe, bestehend aus Getreidekeimen, Getreideflocken und Nüssen; die obere Konzentrationsgrenze liegt bei 70 Gew.-%; besonders bevorzugt sind Konzentrationen von mindestens 5 Gew.-% und höchstens 10 Gew.-% und insbesondere eine Konzentration von etwa 22 Gew.-%;
c) mindestens 0,2 Gew.-% Meersalz; die obere Konzentrationsgrenze liegt bei 30 Gew.-%; besonders bevorzugt sind Konzentrationen von mindestens 2 Gew.-% und höchstens 25 Gew.-% und insbesondere eine Konzentration von etwa 13 Gew.-%;
d) mindestens 0,2 Gew.-% ungesättigte Fettsäuren enthaltendes Öl; die obere Konzentrationsgrenze liegt bei 50 Gew.-%; besonders bevorzugt sind Konzentrationen von mindestens 3 Gew.-% und höchstens 35 Gew.-% und insbesondere eine Konzentration von etwa 9 Gew -%.

Die Summe aller Konzentrationen beträgt selbstverständlich 100 Gew.-%.

Je nach Gehalt der einzelnen Bestandteile können verschiedene Geschmacksrichtungen eingestellt werden. Um die Variationsbreite des Geschmacks noch zu erhöhen, können weitere Komponenten in der Mischung enthalten sein.

Die Grünpflanzen werden je nach Verfügbarkeit zu der Gewürzmischung zugegeben, um diese Pflanzen direkt nach der Ernte frisch verarbeiten zu können. Damit kann die Mischung bei jeder Jahreszeit hergestellt werden. Es können unterschiedliche Kombinationen dieser Bestandteile verarbeitet werden. Von diesen Pflanzen werden insbesondere die Blätter zur Zubereitung der Mischung verwendet. Die Blätter werden nach der Ernte möglichst frisch weiterverarbeitet, indem sie nach dem Waschen zerhäckselt werden. Dabei wird je nach gewünschter Konsistenz der Mischung ein grober oder feiner Häckselungsgrad eingestellt.

Die Äpfel werden ebenfalls gewaschen, von der Schale und dem Kerngehäuse befreit und zerkleinert. Gegebenenfalls in der Gewürzmischung zusätzlich enthaltene Möhren werden gewaschen und anschließend zerkleinert. Es werden Weizen- und/oder Haferkeime als Getreidekeime bzw. Getreide- und/oder Hafertlocken als Getreideflocken verwendet.

Meersalz dient gleichzeitig zur Abrundung des Geschmacks und zur Konservierung der Gewürzmischung. Unter Meersalz sollen sowohl aus dem Meer gewonnenes Salz wie auch andere Salzqualitäten verstanden werden, sofern diese Magnesium enthalten. Daher ist auch Steinsalz mit umfaßt, wenn der Mischung separat Magnesiumsalze zugegeben werden. Wenn die verwendeten Kräuter und Gemüse in das Salz eingelegt werden, stellt dieses den geschmacksbestimmenden Faktor der Mischung dar. Eine weitere Salzzugabe zum Fertigprodukt ist daher nicht mehr erforderlich. Eine weitere Funktion des Meersalzes besteht darin, arteriosklerotische Frühschäden zu vermeiden und blutdruckregulierend zu wirken.

Als ungesättigte Fettsäuren enthaltendes Öl wird vorzugsweise Olivenöl verwendet. Dieses enthält neben den ungesättigten essentiellen Fettsäuren zusätzlich Phytosterine, Vitamin E und in geringerer Menge auch Vitamin A. Vorzugsweise wird sogenanntes Jungfernöl verwendet, d.h. das bei der ersten Kaltpressung der Oliven gewonnene Öl. Das bei der zweiten Kaltpressung und insbesondere bei einer Heißpressung gewonnene Öl kann nur in geringerem Maße oder gar nicht mehr zur erfindungsgemäßen Wirkung der Gewürzmischung beitragen. Das Öl dient ferner gleichzeitig zur Abrundung des Geschmacks und zur Konservierung der Gewürzmischung.

Andere ungesättigte Fettsäuren enthaltende Öle, die ebenfalls zur Zubereitung der erfindungsgemäßen Gewürzmischung verwendet werden können, sind Erdnuß-, Distel- und Maisöl, die zudem der Gewürzmischung einen spezifischen Geschmack verleihen. Auch die Getreidekeime und -flocken enthalten ungesättigte Fettsäuren und verstärken damit die Wirkung der fettlöslichen Bestandteile der übrigen Gewürzkomponenten, die die Cholesterinwirkung der Eier und Eiprodukte abschwächen bzw. ausschließen, beispielsweise von Vitamin A.

Die einzelnen Bestandteile der Mischung werden nach dem Zerkleinern der Pflanzenteile miteinander vermischt und mit dem Salz und dem Öl angerührt.

Vorzugsweise wird die erfindungsgemäße Gewürzmischung zum Würzen von Eiern. Eiprodukten und anderen cholesterinhaltigen Speisen, beispielsweise zum Würzen von Butter enthaltenden Speisen oder von Frischfleisch, eingesetzt. Dabei werden die schädlichen Wirkungen dieser Nahrungsmittel beim Verzehr ausgeschlossen bzw. zumindest minimiert.

### Beispiel:

Es wird eine Gewürzmischung mit folgender Zusammensetzung durch Zusammenmischen hergestellt:

| | |
|---|---|
| frisch geerntete fein gehackte Petersilie | 180 g |
| frisch geerntete fein gehackte Löwenzahnblätter | 80 g |
| frisch geerntete fein gehackte Brennesselblätter | 180 g |
| frisch geerntete Wacholderbeeren | 50 g |
| Apfelpektin | 80 g |
| fein gehackte Zwiebeln | 100 g |
| feinst gehackte Sonnenblumenkerne | 100 g |
| Haferflocken | 100 g |
| gemahlener schwarzer Pfeffer | 10 g |
| Meersalz | 120 g |
| Olivenöl | 80 g |

Es entsteht eine optisch ansprechende Gewürzmischung (Gesamtgewicht: 1080 g), die eine pastöse Konsistenz aufweist und mehrere Wochen lang ohne Kühlung haltbar ist. Die Mischung kann auf halbierte hartgekochte Hühnereier als Belag aufgetragen werden, wobei die aufgetragene Menge der Gewürzmischung etwa der Menge des halbierten Eies entspricht. Die Mischung verleiht dem Ei beim Verzehr einen würzigen Geschmack.

## Patentansprüche

1. Gewürzmischung, insbesondere zum Würzen von Eiern und Eiprodukten, enthaltend
a) Pflanzenteile mindestens einer Pflanzenart aus der Gruppe, bestehend aus Bärenlauch, Gartenkresse, Brunnenkresse, Brennessel, Löwenzahn, Petersilie, Broccoli, Grünkohl, Kohlrabi, Rosenkohl, Weißkohl, Wirsingkohl, Schafgarbe, Arnika und Wacholder,
b) Pflanzenteile aus der Gruppe, bestehend aus Getreidekeimen, Getreideflocken und Nüssen,
c) Meersalz und
d) ungesättigte Fettsäuren enthaltendes Öl.

2. Gewürzmischung nach Anspruch 1, enthaltend
a) 0,2 bis 90 Gew.-% Pflanzenteile von Pflanzen aus der Gruppe, bestehend aus Bärenlauch, Gartenkresse, Brunnenkresse, Brennessel, Löwenzahn, Petersilie, Broccoli, Grünkohl, Kohlrabi, Rosenkohl, Weißkohl, Wirsingkohl, Schafgarbe, Arnika und Wacholder,
b) 0,1 bis 70 Gew.-% Pflanzenteile aus der Gruppe, bestehend aus Getreidekeimen, Getreideflocken und Nüssen,
c) 0,2 bis 30 Gew.-% Meersalz und
d) 0,2 bis 50 Gew.-% ungesättigte Fettsäuren enthaltendes Öl.

3. Gewürzmischung nach einem der vorstehenden Ansprüche, **gekennzeichnet durch** Olivenöl als ungesättigte Fettsäuren enthaltendes Öl.

4. Gewürzmischung nach einem der vorstehenden Ansprüche, **gekennzeichnet durch** zusätzlich enthaltenes Pektin, vorzugsweise in einer Konzentration von 0,1 bis 20 Gew.-%.

5. Gewürzmischung nach Anspruch 4, **dadurch gekennzeichnet, daß** das zusätzlich enthaltene Pektin zumindest teilweise durch zusätzliche Zugabe von Apfel in der Gewürzmischung enthalten ist.

6. Gewürzmischung nach einem der vorstehenden Ansprüche, **gekennzeichnet durch** Weizen- und Haferkeime als Getreidekeime und Weizen- und Haferflocken als Getreideflocken.

7. Gewürzmischung nach einem der vorstehenden Ansprüche, **dadurch gekennzeichnet, daß** als Pflanzenteile der Pflanzen aus der Gruppe, bestehend aus Bärenlauch, Gartenkresse, Brunnenkresse, Brennessel, Löwenzahn, Petersilie, Broccoli, Grünkohl, Kohlrabi, Posenkohl, Weißkohl, Wirsingkohl, Schafgarbe, Arnika und Wacholder, deren Blätter enthalten sind.

8. Gewürzmischung nach einem der vorstehenden Ansprüche, **gekennzeichnet durch** zusätzlich enthaltenen Pfeffer, vorzugsweise in einer Konzentration von 0,1 bis 20 Gew.%.

9. Gewürzmischung nach einem der vorstehenden Ansprüche, **gekennzeichnet durch** zusätzlich enthaltene Zwiebeln und/oder Knoblauch, vorzugsweise in einer Konzentration von 0,1 bis 40 Gew.-%.

10. Gewürzmischung nach einem der vorstehenden Ansprüche, **gekennzeichnet durch** zusätzlich enthaltene Möhre.

11. Gewürzmischung nach einem der vorstehenden Ansprüche, **gekennzeichnet durch** zusätzlich enthaltene Pflanzenteile des Sellerie.

12. Gewürzmischung nach einem der vorstehenden Ansprüche, **gekennzeichnet durch** zusätzlich enthaltene Geschmacksverstärker.

13. Verwendung der Gewürzmischung nach einem der vorstehenden Ansprüche zum Würzen von Eiern, Eiprodukten und anderen cholesterinhaltigen Speisen.

## Claims

1. Mixture of herbs, more especially for flavouring eggs and egg products, containing
a) parts of plants of at least one plant type selected from the group including ramson, cress, watercress, stinging nettle, dandelion, parsley, broccoli, green cabbage, kohlrabi, Brussels sprouts, white cabbage, Savoy cabbage, yarrow, arnica and juniper,
b) parts of plants selected from the group including cereal germs, cereal flakes and nuts,
c) sea salt, and
d) oil containing unsaturated fatty acids.

2. Mixture of herbs according to claim 1, containing
a) 0.2 to 90 % by wt. parts of plants selected from the group including ramson, cress, watercress, stinging nettle, dandelion, parsley, broccoli, green cabbage, kohlrabi, Brussels sprouts, white cabbage, Savoy cabbage, yarrow, arnica and juniper,
b) 0.1 to 70 % by wt. parts of plants selected from the group including cereal germs, cereal flakes and nuts,
c) 0.2 to 30 % by wt. sea salt, and
d) 0.2 to 50 % by wt. oil containing unsaturated fatty acids.

3. Mixture of herbs according to one of the preceding claims, **characterised by** olive oil as the oil containing unsaturated fatty acids.

4. Mixture of herbs according to one of the preceding claims, **characterised by** additionally contained pectin, preferably in a concentration of 0.1 to 20 % by wt.

5. Mixture of herbs according to claim 4, **characterised in that** the additionally contained pectin is contained at least partially in the mixture of herbs by the further addition of apple.

6. Mixture of herbs according to one of the preceding claims, **characterised by** wheat and oat germs as the cereal germs, and by wheat and oat flakes as the cereal flakes.

7. Mixture of herbs according to one of the preceding claims, **characterised in that** it contains the leaves as the parts of the plants selected from the group including ramson, cress, watercress, stinging nettle, dandelion, parsley, broccoli, green cabbage, kohlrabi, Brussels sprouts, white cabbage, Savoy cabbage, yarrow, arnica and juniper.

8. Mixture of herbs according to one of the preceding claims, **characterised by** additionally contained pepper, preferably in a concentration of 0.1 to 20 % by wt.

9. Mixture of herbs according to one of the preceding claims, **characterised by** additionally contained onions and/or garlic, preferably in a concentration of 0.1 to 40 % by wt.

10. Mixture of herbs according to one of the preceding claims, **characterised by** additionally contained carrot.

11. Mixture of herbs according to one of the preceding claims, **characterised by** additionally contained plant parts of celeriac.

12. Mixture of herbs according to one of the preceding claims, **characterised by** additionally contained flavour enhancers.

13. Use of the mixture of herbs according to one of the preceding claims for flavouring eggs, egg products and other cholesterol-containing foods.

## Revendications

1. Mélange de condiments, en particulier pour aromatiser des oeufs et produits d'oeufs, comprenant
a) des parties de plante d'au moins une espèce de plantes du groupe composé d'ail sauvage, cresson de jardin, cresson de fontaine, ortie, pissenlit, persil, brocoli, chou vert, chou-rave, chou de Bruxelles, chou blanc, chou frisé, achillée, arnica et genévrier,
b) des parties de plante du groupe composé de germes de céréales, flocons de céréales et noix,
c) du sel de mer et
d) de l'huile contenant des acides gras non saturés.

2. Mélange de condiments selon la revendication 1, comprenant
a) de 0,2 à 90% en poids de parties de plantes du groupe composé d'ail sauvage, cresson de jardin, cresson de fontaine, ortie, pissenlit, persil, brocoli, chou vert, chou-rave, chou de Bruxelles, chou blanc, chou frisé, achillée, arnica et genévrier,
b) de 0,1 à 70% en poids de parties de plantes du groupe composé de germes de céréales, flocons de céréales et noix,
c) de 0,2 à 30% en poids de sel de mer et
d) de 0,2 à 50% en poids d'huile contenant des acides gras son saturés.

3. Mélange de condiments selon l'un quelconque des revendications précédentes, **caractérisé par** de l'huile d'olive comme huile contenant des acides gras non saturés.

4. Mélange de condiments selon l'une quelconque des revendications précédentes, **caractérisé par** de la pectine contenue en supplément, de préférence en une concentration allant de 0,1 à 20% en poids.

5. Mélange de condiments selon la revendication 4, **caractérisé en ce que** la pectine contenue en supplément est contenue au moins en partie par l'addition supplémentaire de pomme dans le mélange de condiments.

6. Mélange de condiments selon l'une quelconque des revendications précédentes, **caractérisé par** des germes de blé et d'avoine comme germes de céréales et par des flocons de blé et d'avoine comme flocons de céréales.

7. Mélange de condiments selon l'une quelconque des revendications précédentes, **caractérisé en ce que**, comme parties de plante des plantes du groupe composé d'ail sauvage, cresson de jardin, cresson de fontaine, ortie, pissenlit, persil, brocoli, chou vert, chou-rave, chou de Bruxelles, chou blanc, chou frisé, achillée, arnica et genévrier, dont les feuilles sont contenues.

8. Mélange de condiments selon l'une quelconque des revendications précédentes, **caractérisé par** du poivre contenu en supplément, de préférence en une concentration allant de 0,1 à 20% en poids.

9. Mélange de condiments selon l'une quelconque des revendications précédentes, **caractérisé par** des oignons et/ou de l'ail contenu(s) en supplément, de préférence en une concentration allant de 0,1 à 40% en poids.

10. Mélange de condiments selon l'une quelconque des revendications précédentes, **caractérisé par** de la carotte contenue en supplément.

11. Mélange de condiments selon l'une quelconque des revendications précédentes, **caractérisé par** des parties de plante de céleri contenues en supplément.

12. Mélange de condiments selon l'une quelconque des revendications précédentes, **caractérisé par** des exhausteurs de goût contenus en supplément.

13. Utilisation du mélange de condiments selon l'une quelconque des revendications précédentes pour aromatiser des oeufs, produits d'oeufs et autres mets contenant du cholestérol.
